# EUROPÄISCHE PATENTSCHRIFT

(11) **EP 4 151 899 B1**
(45) Veröffentlichungstag und Bekanntmachung des Hinweises auf die Patenterteilung: **07.05.2025**
(21) Anmeldenummer: 22172678.9
(22) Anmeldetag: 11.05.2022
(51) Int. Cl.: F16P 3/14

(54) **ÜBERWACHUNGSEINRICHTUNG**
MONITORING DEVICE
DISPOSITIF DE SURVEILLANCE

(30) Priorität: 15.09.2021 DE 202021104977 U
(43) Veröffentlichungstag der Anmeldung: 22.03.2023
(73) Patentinhaber: Leuze electronic GmbH + Co. KG, 73277 Owen/Teck (DE)
(72) Erfinder: Bégou, Frédéric, 77860 Quincy Voisins (FR); Eder, Alexander, 86928 Hofstetten (DE); Rohbeck, Volker, 85244 Röhrmoos (DE)
(74) Vertreter: Ruckh, Rainer Gerhard

(56) Entgegenhaltungen:
- EP-A1- 3 211 287
- EP-A1- 3 415 804

## Beschreibung

Die Erfindung betrifft eine Überwachungseinrichtung.

Derartige Überwachungseinrichtungen können zur Sicherung von Gefahrenbereichen an Anlagen vorgesehen sein, in welchem von der Anlage gefahrbringende Bewegungen ausgeführt werden.

Insbesondere kann ein Zugang zu einer Anlage abgesichert werden. Der Zugang zur Anlage kann durch ein Förderband oder dergleichen realisiert sein, über welches Transportgüter der Anlage zugeführt werden.

Die Überwachungseinrichtung weist wenigstens einen Sicherheitssensor auf. Mit dem Sicherheitssensor kann der Zugang zur Anlage überwacht werden. Dabei wird mit dem Sicherheitssensor ein Schutzfeld überwacht, das sich über den gesamten Zugangsbereich erstreckt.

Wird mit dem Sicherheitssensor ein Objekt, insbesondere eine Person, im Schutzfeld erkannt, wird eine Sicherheitsfunktion ausgelöst, die die Anlage in einen sicheren Zustand versetzt, so dass von dieser keine Gefahren mehr ausgehen können. Insbesondere wird die Anlage stillgesetzt.

Zur Durchführung von Arbeitsvorgängen mittels der Anlage müssen dieser Transportgüter zugeführt werden. Bei Passieren des Zugangs würde eine durch den Sicherheitssensor ausgelöste Sicherheitsfunktion bei Detektion des Transportguts im Schutzfeld zu einem unnötigen Stillstand der Anlage führen.

Daher sind bei bekannten Überwachungseinrichtungen Mutingsensoren vorgesehen, die dem Sicherheitssensor in Transportrichtung des Transportguts vorgeordnet sind. Typischerweise sind die Mutingsensoren von Lichtschrankenanordnungen gebildet. Anhand charakteristischer Folgen von Strahlunterbrechungen von Lichtschranken dieser Lichtschrankenanordnungen können Transportgüter von Personen oder anderen sicherheitskritischen Objekten unterschieden werden.

Wird mit den Mutingsensoren das Transportgut erkannt, wird der Sicherheitssensor überbrückt, das heißt gemutet, so dass während eines Mutingbetriebs ein Eindringen eines Objekts in das Schutzfeld des Sicherheitssensors nicht zur Auslösung der Sicherheitsfunktion führt. Damit kann das Transportgut den Sicherheitssensor passieren, ohne dass die Sicherheitsfunktion ausgelöst und die Anlage stillgesetzt wird.

Nachdem das Transportgut den Sicherheitssensor passiert hat, wird der Mutingbetrieb beendet und der Sicherheitssensor übernimmt wieder eine Überwachungsfunktion.

Ein Problem bei einem derartigen Muting ist, dass der gesamte Sicherheitssensor überbrückt wird und damit überhaupt keine Überwachungsfunktion mehr gegeben ist. Dies kann insbesondere dann zu Gefahrensituationen führen, wenn sich das Transportgut nicht über die gesamte Breite des Zugangs erstreckt. Dann kann eine Person neben dem Transportgut stehend den Zugang passieren und unbemerkt in den Gefahrenbereich der Anlage gelangen. Dies führt zu unkontrollierten Gefahrensituationen.

Die Bereiche neben dem Transportgut könnten zwar prinzipiell durch mechanische Schutzeinrichtungen wie Pendelklappen gesichert werden, was jedoch konstruktiv aufwändig ist.

Die EP 3 415 804 A1 betrifft eine Sicherheitsvorrichtung mit wenigstens einem optischen Sicherheitssensor, welcher zur Überwachung eines flächigen oder räumlichen Überwachungsbereichs ausgebildet ist. Weiterhin umfasst die Sicherheitsvorrichtung mit eine dem Sicherheitssensor zugeordnete Sicherheitsausgangsschaltung mit einer Anordnung von Sicherheitsausgängen, welche abhängig von Signalen des Sicherheitssensors gesteuert sind. Es sind Umschaltmittel vorgesehen, mittels derer wenigstens ein Schutzfeld und/oder wenigstens ein Signalfeld aktivierbar ist. Der Sicherheitssensor generiert ein Sicherheitssignal in Form eines Abschaltens der Sicherheitsausgänge, falls mit dem Sicherheitssensor ein Objekt innerhalb des aktivierten Schutzfelds detektiert wird, oder falls innerhalb eines vorgegebenen Zeitintervalls kein zulässiges Objekt innerhalb des aktivierten Signalfelds detektiert wird.

Der Erfindung liegt die Aufgabe zugrunde, die Funktionalität und Sicherheit einer Überwachungseinrichtung der eingangs genannten Art zu verbessern.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung zur Absicherung eines Zugangs zu einer Anlage mit einer Anordnung von Sicherheitssensoren, die jeweils zur Erfassung von Objekten innerhalb eines Schutzfeldes ausgebildet sind, wobei bei Erfassung eines Objekts in wenigstens einem Schutzfeld eine Sicherheitsfunktion ausgelöst wird. Des Weiteren umfasst die Überwachungseinrichtung eine Anordnung von Distanzsensoren, mittels derer die Position und Breite eines Transportguts erfassbar ist, welches über den Zugang der Anlage zuführbar ist, sowie eine Steuer- und Auswerteeinheit, mittels derer ein Normalbetrieb dadurch vorgegeben ist, dass mit den Sicherheitssensoren Schutzfelder überwacht werden, die sich zu einem Gesamtschutzfeld ergänzen, das sich über die gesamte Breite des Zugangs erstreckt. Mit der Steuer- und Auswerteeinheit ist ein Mutingbetrieb dadurch vorgebbar, dass abhängig von der mit den Distanzsensoren bestimmten Position und Breite des Transportguts mit den Sicherheitssensoren Schutzfelder überwacht werden, die sich zu einem Gesamtschutzfeld ergänzen, bei welchem im Bereich des Zugangs eine Aussparung vorhanden ist, die an die Position und Breite des Transportguts so angepasst ist, dass dieses den Zugang ohne Eindringen in das Gesamtschutzfeld passieren kann.

Mit der Anordnung der Sicherheitssensoren wird in einem Normalbetrieb eine Überwachungsfunktion derart durchgeführt, dass sich die Schutzfelder der Sicherheitssensoren zu einem Gesamtschutzfeld ergänzen, das sich über die gesamte Breite des Zugangs erstreckt, so dass damit der Zugang über dessen gesamte Ausdehnung mit den Sicherheitssensoren überwacht wird. Wird an einem beliebigen Ort innerhalb des Gesamtschutzfeldes ein Objekteingriff registriert, so wird dieser mit einem der Sicherheitssensoren innerhalb dessen Schutzfeldes erkannt und es wird eine Sicherheitsfunktion ausgelöst, so dass von der Anlage keine Gefahren mehr ausgehen können. Insbesondere wird die Anlage stillgesetzt.

Die erfindungsgemäße Überwachungseinrichtung kann weiterhin in einem Mutingbetrieb betrieben werden, wobei im Mutingbetrieb ein Transportgut die Anordnung der Sicherheitssensoren passieren kann, ohne dass diese eine Sicherheitsfunktion generieren, das heißt bei Passieren der Sicherheitssensoren löst das Transportgut keine unnötige Sicherheitsfunktion aus.

Der Begriff Transportgut umfasst allgemein beliebige nichtsicherheitskritische Objekte, die der Anlage über den Zugang zuzuführen sind. Die Transportgüter werden dabei insbesondere über eine Fördereinrichtung wie einem Förderband der Anlage zugeführt. Die Transportgüter können beispielsweise von Paletten gebildet sein.

Erfindungsgemäß wird mittels Distanzsensoren das jeweilige Transportgut nicht nur als solches erkannt. Vielmehr wird mit dem Transportgut dessen Breite und dessen Position, insbesondere dessen Lage auf der Fördereinrichtung erfasst.

Abhängig von den in den Distanzsensoren generierten Ausgangssignalen wird in der Steuer- und Auswerteeinheit für den Mutingbetrieb für jeden Sicherheitssensor ein Schutzfeld derart vorgegeben, dass sich die einzelnen Schutzfelder zu einem Gesamtschutzfeld ergänzen, das sich nicht mehr über den gesamten Zugang erstreckt. Vielmehr enthält das Gesamtschutzfeld eine Aussparung, die an die Breite und Position des Transportguts angepasst ist.

Damit kann im Mutingbetrieb das Transportgut durch diese Aussparung im Gesamtschutzfeld den Zugang passieren, ohne dass das Transportgut in das Gesamtschutzfeld ragt, was zum Auslösen der Sicherheitsfunktion führen würde.

Damit passiert das Transportgut den Zugang ohne Auslösen einer Sicherheitsfunktion. Da die Aussparung im Gesamtschutzfeld an die Breite, das heißt Kontur des Transportguts angepasst ist, schließt das Gesamtschutzfeld nahezu lückenlos an das Transportgut an. Damit kann eine Person oder ein sicherheitskritisches Objekt nicht unbemerkt, das heißt nicht ohne Auslösen der Sicherheitsfunktion den Zugang neben dem Transportgut während des Mutingbetriebs passieren, wodurch die Sicherheit der Überwachungseinrichtung wesentlich erhöht ist.

Besonders vorteilhaft sind zwei Sicherheitssensoren vorgesehen, die an gegenüberliegenden Seiten des Zugangs angeordnet sind.

Dabei werden mit jedem Sicherheitssensor zweidimensionale Schutzfelder überwacht, die in einer vertikalen Ebene orientiert sind.

Im Normalbetrieb erstreckt sich dann das von den Schutzfeldern gebildete Gesamtschutzfeld über die gesamte Breite und Höhe des Zugangs.

Alternativ kann mit jedem Sicherheitssensor ein dreidimensionaler Bereich überwacht werden.

Vorteilhaft sind die Sicherheitssensoren scannende Distanzsensoren.

Insbesondere sind die Sicherheitssensoren optische Sensoren oder Radarsensoren.

Gemäß einer vorteilhaften Ausführungsform sind zwei Distanzsensoren vorgesehen, die an gegenüberliegenden Seiten des Zugangs vorgesehen sind.

Im einfachsten Fall sind die Distanzsensoren eindimensionale Distanzsensoren, die Strahlung in eine fest vorgegebene Richtung emittieren.

Insbesondere sind die Distanzsensoren optische Sensoren oder Radarsensoren.

Gemäß einer vorteilhaften Weiterbildung können auf jeder Seite des Zugangs auch mehrere Distanzsensoren in unterschiedlichen Höhenlagen vorgesehen sein. Alternativ oder zusätzlich können auch scannende Distanzsensoren eingesetzt werden. Dann werden mehrere Messwerte generiert, aus denen Bereiche für die Position und Breite des Transportguts bestimmt werden können.

Prinzipiell ist es sogar möglich die Höhe des Transportguts zu bestimmen. Damit kann die Aussparung des Gesamtschutzfeldes im Mutingbetrieb an die Höhe des Transportguts angepasst sein, wobei sich dann das Gesamtschutzfeld auch auf den Bereich oberhalb des Transportguts erstrecken kann.

Vorteilhaft kann die Steuer- und Auswerteeinheit von einer sicheren Steuerung oder von wenigstens einer Auswerteeinheit eines Sicherheitssensors gebildet sein.

Zweckmäßig erfolgt mittels der Steuer- und Auswerteeinheit die Vorgabe der Schutzfelder im Mutingbetrieb so, dass die Lücken zwischen den Rändern der Schutzfelder und den Rändern des Transportguts minimiert sind.

Damit ist gewährleistet, dass auch kleine sicherheitskritische Objekte während des Mutingbetriebs nicht den Zugang passieren können, ohne dass eine Sicherheitsfunktion ausgelöst wird.

Dabei kann zur Vorgabe der Schutzfelder im Mutingbereich deren Größen in Stufen oder stufenlos an die Kontur des Transportguts angepasst werden.

Gemäß einer vorteilhaften Ausgestaltung wird das Transportgut in einer Transportrichtung in Richtung der Anlage bewegt, und die Distanzsensoren sind den Sicherheitssensoren in Transportrichtung vorgeordnet.

Zweckmäßig sind die Distanzsensoren in einem Bereich kleiner als 200 Millimeter den Sicherheitssensoren vorgeordnet.

Die Anordnung der Distanzsensoren ist damit an die Transportrichtung des Transportguts angepasst, so dass mit den Distanzsensoren die Position und Breite bestimmt werden kann bevor das Transportgut den von den Sicherheitssensoren überwachten Zugang erreicht. Damit können unabhängig von den Ausgangssignalen der Distanzsensoren die Schutzfelder der Sicherheitssensoren für den Mutingbetrieb festgelegt werden.

Vorteilhaft ist in der Steuer- und Auswerteeinheit eine Zeitsteuerung vorgesehen, mittels derer der Beginn und das Ende des Mutingbetriebs vorgebbar ist.

Dabei werden in der Steuer- und Auswerteeinheit die Ausgangssignale der Distanzsensoren als Triggersignale für den Beginn des Mutingbetriebs genutzt.

Zweckmäßig wird hierzu abhängig von der Detektion mittels Distanzsensoren ein Timer gestartet, und nach Ablauf des Timers wird der Mutingbetrieb gestartet.

Weiter vorteilhaft wird der Mutingbetrieb beendet, sobald das Transportgut das Gesamtschutzfeld passiert hat.

Prinzipiell kann dies dadurch realisiert werden, dass das Beenden des Mutingbetriebs über einen weiteren Timer gesteuert wird.

Besonders vorteilhaft wird während des Mutingbetriebs mit den Sicherheitssensoren ein Warnfeld im Bereich der Aussparung überwacht. Der Mutingbetrieb wird beendet, sobald das Transportgut das Warnfeld verlassen hat.

Da mit Objektdetektionen innerhalb des Warnfeldes das Transportgut während des Passierens des Zugangs fortlaufend erfasst wird, wird damit eine besonders fehlersichere Beendigung des Mutingbetriebs realisiert.

Gemäß einer vorteilhaften Weiterbildung sind den Distanzsensoren in Transportrichtung des Transportguts Zusatzsensoren vorgeordnet, mittels derer das Vorhandensein des Transportguts detektierbar ist. In der Steuer- und Auswerteeinheit wird die Auswertung für das Einleiten des Mutingbetriebs gestartet, wenn mit den Zusatzsensoren das Transportgut detektiert wird.

Zweckmäßig sind die Zusatzsensoren in einem Bereich von 500 Millimetern den Sicherheitssensoren vorgeordnet.

Damit ist das Timing für die Generierung der Schutzfelder im Mutingbetrieb optimal an die Bewegung des jeweiligen Transportguts angepasst.

Zudem wird dadurch gewährleistet, dass für jedes Transportgut von Neuem, abhängig von den Messwerten der Distanzsensoren, die Schutzfelder für den Mutingbetrieb berechnet werden.

Die Erfindung wird im Folgenden anhand der Zeichnungen erläutert. Es zeigen:
- Figur 1:: Erstes Ausführungsbeispiel eines Sicherheitssensors für die Überwachungseinrichtung der Figuren 3 bis 5.
- Figur 2:: Zweites Ausführungsbeispiel eines Sicherheitssensors für die Überwachungseinrichtung der Figuren 3 bis 5.
- Figur 3:: Darstellung eines Ausführungsbeispiels der erfindungsgemäßen Überwachungseinrichtung mit zwei Sicherheitssensoren und zwei Distanzsensoren sowie einem Transportgut im Vorfeld der Sicherheitssensoren und Distanzsensoren
a) Draufsicht von oben,
b) Seitenansicht,
c) in einer Querschnittdarstellung.
- Figur 4a - 4c:: Anordnung gemäß den Figuren 3a bis 3c bei im Bereich der Distanzsensoren angeordnetem Transportgut.
- Figur 5a - 5c.: Anordnung gemäß den Figuren 3a bis 3c bei im Bereich der Sicherheitssensoren angeordnetem Transportgut.

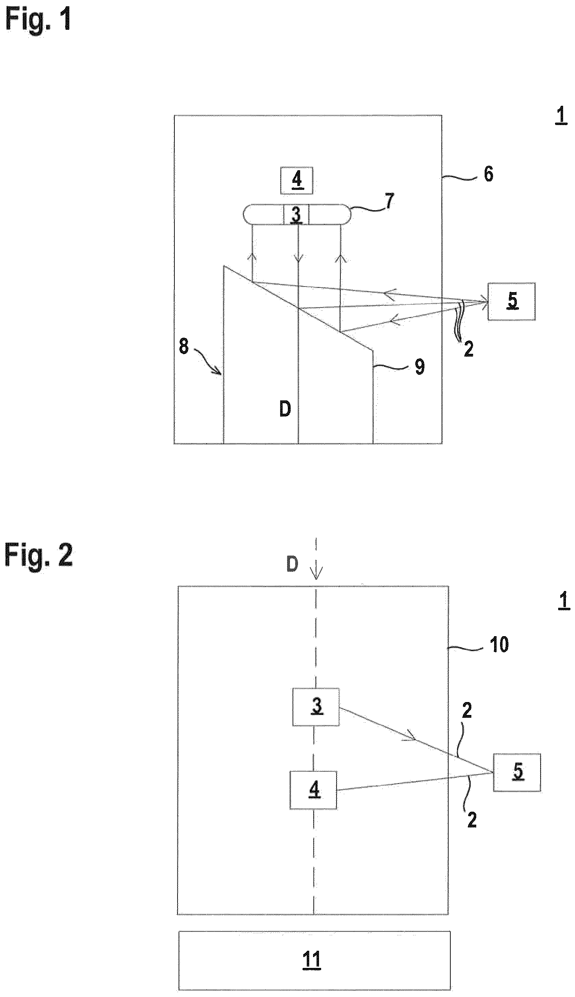

Die Figuren 1 und 2 zeigen Ausführungsbeispiele von Sicherheitssensoren 1 in Form von distanzmessenden optischen Sensoren, wobei die Distanzmessungen vorteilhaft nach einem Impuls-Laufzeitverfahren oder einem Phasenmessverfahren erfolgen.

Figur 1 zeigt ein Ausführungsbeispiel eines optischen Sensors in Form eines Flächendistanzsensors, das heißt eines scannenden Distanzsensors 12. Zur Durchführung von Distanzmessungen weist der optische Sensor einen Lichtstrahlen 2 emittierenden Sender 3 und einen Lichtstrahlen 2 empfangenden Empfänger 4 auf. Der Sender 3 emittiert Lichtstrahlen 2 in Form von Lichtimpulsen. Wie Figur 1 zeigt, werden die Lichtstrahlen 2 an einem zu detektierenden Objekt 5 reflektiert, wobei die entsprechende Lichtlaufzeit der Lichtimpulse zum Objekt 5 und zurück zum optischen Sensor für die Distanzbestimmungen ausgewertet werden.

Wie Figur 1 zeigt, sind die Sensorkomponenten der optischen Sensoren in einem Gehäuse 6 integriert, wobei der Sender 3 sowie der Empfänger 4 mit einer vorgeordneten Sendeoptik beziehungsweise Empfangsoptik 7 stationär im Gehäuse 6 angeordnet sind. Mit dem optischen Sensor erfolgt eine Objektdetektion in einem flächigen Erfassungsbereich dadurch, dass die Lichtstrahlen 2 mittels einer Ablenkeinheit 8 periodisch abgelenkt werden. Die Ablenkeinheit 8 ist motorisch angetrieben und umfasst einen um eine Drehachse D drehbaren Winkelspiegel 9, an dem die Lichtstrahlen 2 abgelenkt werden.

Figur 2 zeigt eine Variante des Flächendistanzsensors gemäß Figur 1. In diesem Fall erfolgt die periodische Ablenkung der Lichtstrahlen 2 dadurch, dass der Sender 3 und der Empfänger 4 in einem um eine Drehachse D drehbaren Messkopf 10 angeordnet sind, wobei der Messkopf 10 auf einem Sockel 11 drehbar gelagert ist.

Generell weist jeder Sicherheitssensor 1 eine nicht dargestellte Auswerteeinheit auf, in der die Empfangssignale des Empfängers 4 ausgewertet werden können.

Für den Einsatz im Bereich der Sicherheitstechnik weisen die Sicherheitssensoren 1 gemäß den Figuren 1 und 2 einen fehlersicheren Aufbau auf, der beispielsweise durch eine redundante Auswerteeinheit in Form zweier sich zyklisch gegenseitig überwachender Prozessoren realisiert werden kann.

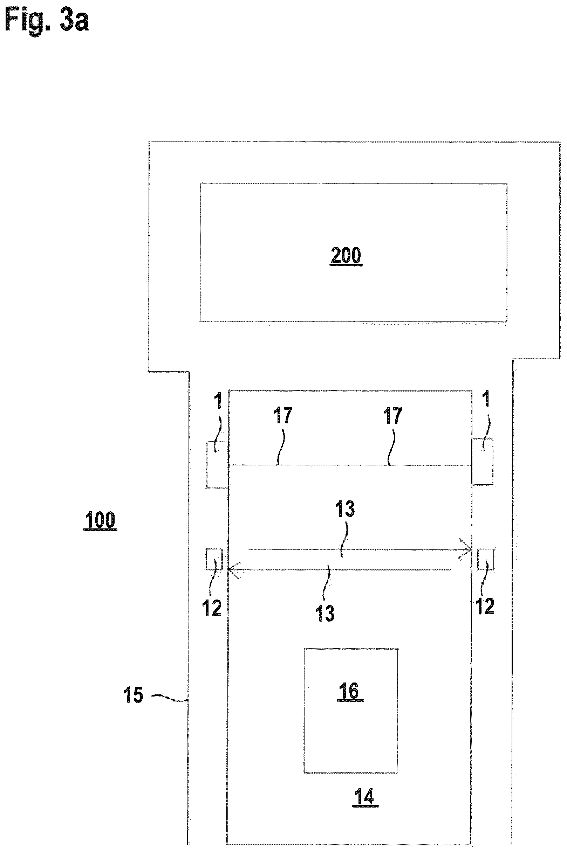

Die Figuren 3a bis 3c, 4a bis 4c und 5a bis 5c zeigen ein Ausführungsbeispiel der erfindungsgemäßen Überwachungseinrichtung 100. Die Überwachungseinrichtung 100 umfasst zwei Sicherheitssensoren 1 und zwei Distanzsensoren 12, die im vorliegenden Fall als eindimensionale Distanzsensoren 12 ausgebildet sind, die Messstrahlen 13 in eine fest vorgegebene Richtung emittieren. Die Distanzsensoren 12 können als optische Sensoren oder als Radarsensoren ausgebildet sein.

Die Sicherheitssensoren 1 sind an gegenüberliegenden Seiten des Zugangs zu einer Anlage 200 im Bereich dessen oberen Grenze angeordnet.

Die Distanzsensoren 12 sind in geringerer Höhe beidseits des Zugangs zur Anlage 200 angeordnet.

Der Zugang zur Anlage 200 erfolgt ausschließlich über ein Förderband 14. Seitlich ist der Bereich der Anlage 200 und des Förderbands 14 durch eine Umzäunung 15 gesichert.

Das Förderband 14 wird in einer Transportrichtung bewegt, um Transportgut 16 der Anlage 200 zuzuführen.

Die Distanzsensoren 12 sind in Transportrichtung den Sicherheitssensoren 1 vorgelagert, beispielsweise in einem Bereich von 200 Millimetern.

Mit jedem Sicherheitssensor 1 wird ein Schutzfeld 17 überwacht, das in einer vertikalen Ebene verläuft und damit senkrecht zur Oberfläche des Förderbands 14 orientiert ist.

Zur Steuerung der Überwachungseinrichtung 100 ist eine nicht dargestellte Steuer- und Auswerteeinheit vorgesehen. Die Steuer- und Auswerteeinheit kann von einer sicheren Steuerung als separate Einheit ausgebildet sein. Alternativ kann die Steuer- und Auswerteeinheit von einer Auswerteeinheit des Sicherheitssensors 1 gebildet sein. Die Messwerte der Distanzsensoren 12 werden der Steuer- und Auswerteeinheit zugeführt. Abhängig hiervon steuert die Steuer- und Auswerteeinheit die Sicherheitssensoren 1.

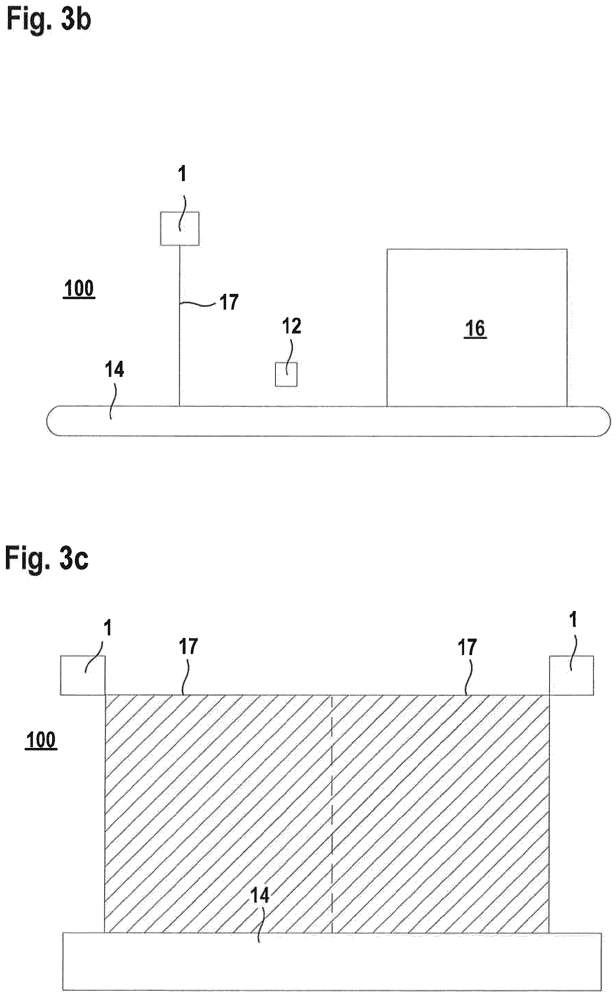

Die Figuren 3a bis 3c zeigen die Überwachungseinrichtung 100 in einem Normalbetrieb. In diesem Normalbetrieb ist für jeden Sicherheitssensor 1 ein Schutzfeld 17 derart aktiviert, dass sich die Schutzfelder 17 in einem Gesamtschutzfeld ergänzen, mit dem der Zugang vollständig und lückenlos überwacht wird. Wie aus Figur 3c ersichtlich, erstreckt sich das von den Schutzfeldern 17 der Sicherheitssensoren 1 gebildete Gesamtschutzfeld über die gesamte Breite des Förderbands 14 und erstreckt sich nach oben bis zu den Sicherheitssensoren 1.

Dringt in das Gesamtschutzfeld ein Objekt 5 oder eine Person ein, löst wenigstens ein Sicherheitssensor 1 die Sicherheitsfunktion aus, mit der die Anlage 200 in einen sicheren Zustand überführt wird, insbesondere stillgesetzt wird.

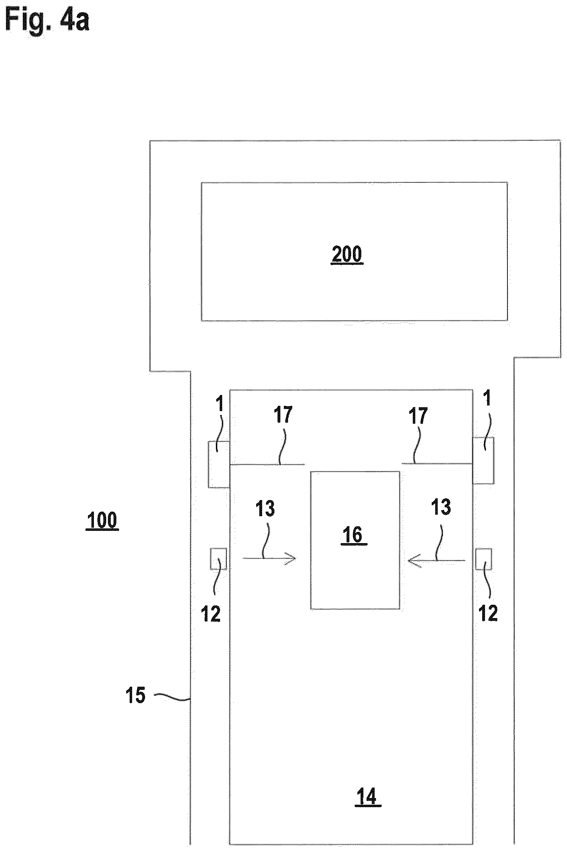

Bei der Anordnung der Figuren 3a bis 3c befindet sich das Transportgut 16 noch im Vorfeld der Sicherheitssensoren 1 und der Distanzsensoren 12. Bei der Anordnung der Figuren 4a bis 4c wird das Transportgut 16 von den Distanzsensoren 12 erkannt, befindet sich aber noch nicht im Bereich der Sicherheitssensoren 1, sondern unmittelbar vor Eintritt in den Bereich der Sicherheitssensoren 1.

Mit der Steuer- und Auswerteeinheit erfolgt eine Zeitsteuerung, mit der der Übergang der Überwachungseinrichtung 100 vom Normalbetrieb in einen Mutingbetrieb und auch die Dauer des Mutingbetriebs gesteuert wird.

Sobald das Transportgut 16 in den Bereich der Distanzsensoren 12 eintritt, wird mit diesen die Breite des Transportguts 16 und dessen Position auf dem Förderband 14 anhand der Messwerte, das heißt Ausgangssignale der Distanzsensoren 12 bestimmt. Diese Informationen werden in die Steuer- und Auswerteeinheit eingelesen.

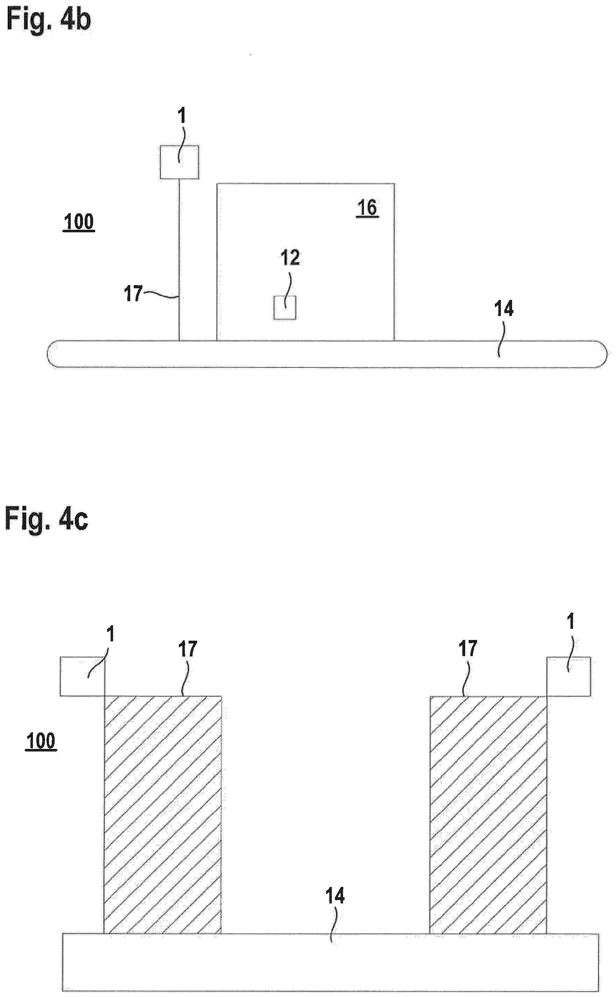

Die Steuer- und Auswerteeinheit nutzt die Ausgangssignale der Distanzsensoren 12 als Triggersignale für den Beginn des Mutingbetriebs. Sobald die Distanzsensoren 12 das Transportgut 16 detektieren, wird in der Steuer- und Auswerteeinheit ein Timer gestartet. Nach Ablauf des Timers wird der Mutingbetrieb gestartet, und zwar dann, wenn sich das Transportgut 16 unmittelbar vor Eintritt in den Bereich der Sicherheitssensoren 1 befindet, wie in den Figuren 4a, 4b dargestellt. Diese Vorgabe der Timerzeit erfolgt in Abhängigkeit der bekannten Transportgeschwindigkeit des Förderbands 14.

Im Mutingbetrieb wurden über die Steuer- und Auswerteeinheit geänderte Schutzfelder 17 für die Sicherheitssensoren 1 vorgegeben, wie in Figur 4c dargestellt. Die Schutzfelder 17 sind so dimensioniert, dass zwischen diesen eine Aussparung verbleibt, die an die Position und Breite des Transportguts 16 angepasst ist (Figur 4c).

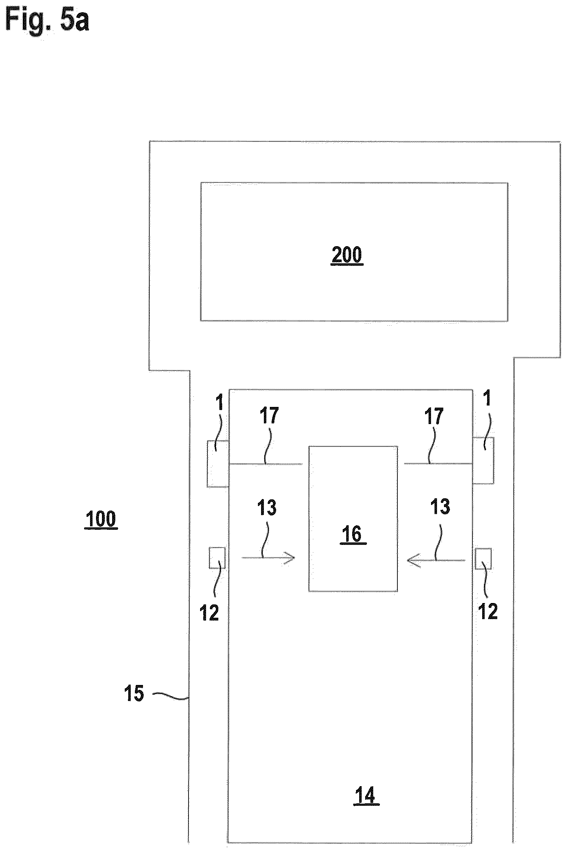

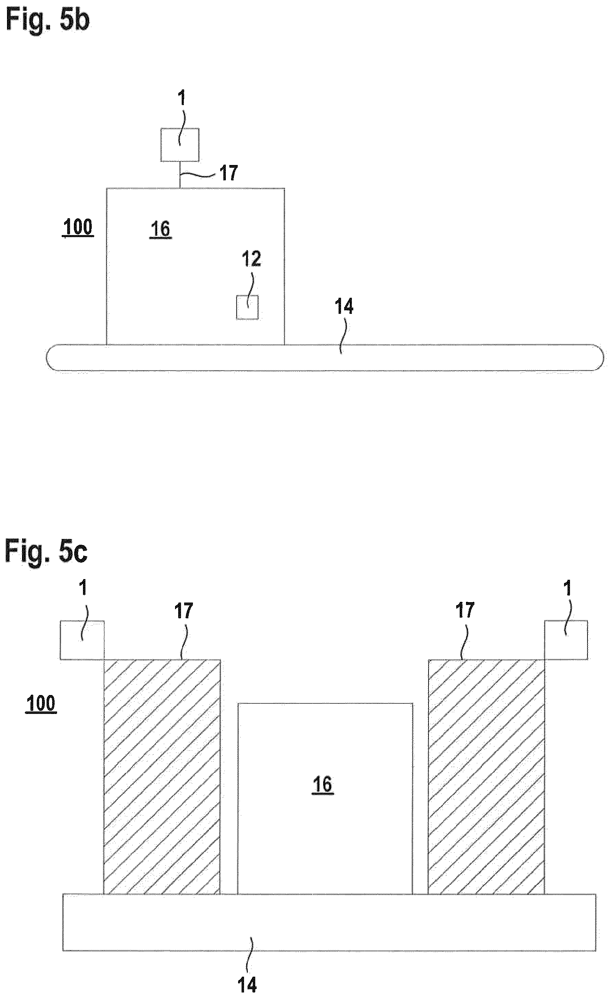

Fährt dann das Transportgut 16 in den Bereich der Sicherheitssensoren 1 ein (Figuren 5a bis 5c), wird dieses durch die Aussparung zwischen den Schutzfeldern 17 durch den Zugang zur Anlage 200 geführt, ohne dass das Transportgut 16 in die Schutzfelder 17 eindringt. Damit lösen die Schutzfelder 17 keine Sicherheitsfunktion aus und das Transportgut 16 gelangt zur Anlage 200, ohne dass diese unnötig stillgesetzt wird.

Die Dimensionierung der Schutzfelder 17 im Mutingbetrieb erfolgt derart, dass die Lücken zwischen den Rändern des Transportguts 16 und der Schutzfelder 17 minimal sind.

Dabei können zur Vorgabe der Schutzfelder 17 im Mutingbereich deren Größen in Stufen oder stufenlos an die Kontur des Transportguts 16 angepasst werden.

Mit den Schutzfeldern 17 wird während des Mutingbetriebs der seitlich an das Transportgut 16 angrenzende Bereich des Zugangs überwacht. Damit wird verhindert, dass eine Person oder allgemein ein sicherheitskritisches Objekt 5 neben dem Transportgut 16 unbemerkt den Zugang passieren kann, ohne dass eine Sicherheitsfunktion ausgelöst wird. Dadurch, dass die Lücken zwischen den Rändern der Schutzfelder 17 und des Transportguts 16 minimiert sind, werden auch kleine sicherheitskritische Objekte 5 neben dem Transportgut 16 in den Schutzfeldern 17 während des Mutingbetriebs erkannt und führen zum Auslösen der Sicherheitsfunktion.

Der Mutingbetrieb wird solange aufrechterhalten, bis das Transportgut den Bereich der Sicherheitssensoren 1, das heißt der mit den Sicherheitssensoren 1 überwachten Zugang verlassen hat.

Prinzipiell kann das Beenden des Mutingbetriebs über einen weiteren Timer gesteuert werden.

Besonders vorteilhaft wird während des Mutingbetriebs mit den Sicherheitssensoren 1 ein Warnfeld im Bereich der Aussparung überwacht.

Dann wird der Mutingbetrieb beendet, sobald das Transportgut 16 das Warnfeld verlassen hat.

Die Überwachungseinrichtung 100 der Figuren 3 bis 5 kann dadurch weitergebildet sein, dass den Distanzsensoren 12 in Transportrichtung des Transportguts 16 Zusatzsensoren vorgeordnet sind, mittels derer das Vorhandensein des Transportguts 16 detektierbar ist.

Dann, wenn mit den Zusatzsensoren das Transportgut 16 detektiert wird, wird in der Steuer- und Auswerteeinheit die Auswertung für das Einleiten des Mutingbetriebs gestartet.

### Bezugszeichenliste

- (1): Sicherheitssensor
- (2): Lichtstrahl
- (3): Sender
- (4): Empfänger
- (5): Objekt
- (6): Gehäuse
- (7): Empfangsoptik
- (8): Ablenkeinheit
- (9): Winkelspiegel
- (10): Messkopf
- (11): Sockel
- (12): Distanzsensor
- (13): Messstrahlen
- (14): Förderband
- (15): Umzäunung
- (16): Transportgut
- (17): Schutzfeld
- (100): Überwachungseinrichtung
- (200): Anlage
- D: Drehachse

## Patentansprüche

1. Überwachungseinrichtung (100) zur Absicherung eines Zugangs zu einer Anlage (200) mit einer Anordnung aus einem oder mehreren Sicherheitssensoren (1), die jeweils zur Erfassung von Objekten (5) innerhalb eines Schutzfeldes (17) ausgebildet sind, wobei bei Erfassung eines Objekts (5) in wenigstens einem Schutzfeld (17) eine Sicherheitsfunktion ausgelöst wird, und mit einer Anordnung von Distanzsensoren (12), mittels derer die Position und Breite eines Transportguts (16) erfassbar ist, welches über den Zugang der Anlage (200) zuführbar ist, und mit einer Steuer- und Auswerteeinheit, mittels derer ein Normalbetrieb dadurch vorgegeben ist, dass mit den Sicherheitssensoren (1) Schutzfelder (17) überwacht werden, die sich zu einem Gesamtschutzfeld ergänzen, das sich über die gesamte Breite des Zugangs erstreckt, und **dadurch gekennzeichnet, dass** mit der Steuer- und Auswerteeinheit ein Mutingbetrieb dadurch vorgebbar ist, dass abhängig von der mit den Distanzsensoren (12) bestimmten Position und Breite des Transportguts (16) mit den Sicherheitssensoren (1) Schutzfelder (17) überwacht werden, die sich zu einem Gesamtschutzfeld ergänzen, bei welchem im Bereich des Zugangs eine Aussparung vorhanden ist, die an die Position und Breite des Transportguts (16) so angepasst ist, dass dieses den Zugang ohne Eindringen in das Gesamtschutzfeld passieren kann.

2. Überwachungseinrichtung (100) nach Anspruch 1, **dadurch gekennzeichnet, dass** zwei Sicherheitssensoren (1) vorgesehen sind, die an gegenüberliegenden Seiten des Zugangs angeordnet sind.

3. Überwachungseinrichtung (100) nach einem der Ansprüche 1 oder 2, **dadurch gekennzeichnet, dass** mit jedem Sicherheitssensor (1) zweidimensionale Schutzfelder (17) überwacht werden, die in einer vertikalen Ebene orientiert sind.

4. Überwachungseinrichtung (100) nach einem der Ansprüche 1 oder 2, **dadurch gekennzeichnet, dass** mit jedem Sicherheitssensor (1) ein dreidimensionaler Bereich überwacht wird.

5. Überwachungseinrichtung (100) nach einem der Ansprüche 1 bis 4, **dadurch gekennzeichnet, dass** die Sicherheitssensoren (1) scannende Distanzsensoren (12), und/oder, dass die Sicherheitssensoren (1) optische Sensoren oder Radarsensoren sind.

6. Überwachungseinrichtung (100) nach einem der Ansprüche 1 bis 5, **dadurch gekennzeichnet, dass** zwei Distanzsensoren (12) in Form von optischen Sensoren oder Radarsensoren vorgesehen sind, die an gegenüberliegenden Seiten des Zugangs vorgesehen sind, wobei insbesondere die Distanzsensoren (12) eindimensionale Distanzsensoren (12) sind, die Strahlung in eine fest vorgegebene Richtung emittieren.

7. Überwachungseinrichtung (100) nach einem der Ansprüche 1 bis 6, **dadurch gekennzeichnet, dass** das Transportgut (16) in einer Transportrichtung in Richtung der Anlage (200) bewegt wird, und dass die Distanzsensoren (12) den Sicherheitssensoren (1) in Transportrichtung vorgeordnet sind.

8. Überwachungseinrichtung (100) nach Anspruch 7, **dadurch gekennzeichnet, dass** die Distanzsensoren (12) in einem Bereich kleiner als 200 Millimeter den Sicherheitssensoren (1) vorgeordnet sind.

9. Überwachungseinrichtung (100) nach einem der Ansprüche 6 bis 8, **dadurch gekennzeichnet, dass** in den Distanzsensoren (12) generierte Entfernungswerte oder Bereiche von Entfernungswerten als analoge oder digitale Signale der Steuer- und Auswerteeinheit zugeführt werden.

10. Überwachungseinrichtung (100) nach einem der Ansprüche 1 bis 9, **dadurch gekennzeichnet, dass** die Steuer- und Auswerteeinheit von einer sicheren Steuerung oder von wenigstens einer Auswerteeinheit eines Sicherheitssensors (1) gebildet ist.

11. Überwachungseinrichtung (100) nach einem der Ansprüche 1 bis 10, **dadurch gekennzeichnet, dass** mittels der Steuer- und Auswerteeinheit die Vorgabe der Schutzfelder (17) im Mutingbetrieb so erfolgt, dass die Lücken zwischen den Rändern der Schutzfelder (17) und den Rändern des Transportguts (16) minimiert sind, und/oder dass zur Vorgabe der Schutzfelder (17) im Mutingbereich deren Größen in Stufen oder stufenlos an die Kontur des Transportguts (16) angepasst werden.

12. Überwachungseinrichtung (100) nach einem der Ansprüche 1 bis 11, **dadurch gekennzeichnet, dass** in der Steuer- und Auswerteeinheit eine Zeitsteuerung vorgesehen ist, mittels derer der Beginn und das Ende des Mutingbetriebs vorgebbar ist.

13. Überwachungseinrichtung (100) nach Anspruch 12, **dadurch gekennzeichnet, dass** in der Steuer- und Auswerteeinheit die Ausgangssignale der Distanzsensoren (12) als Triggersignale für den Beginn des Mutingbetriebs genutzt werden.

14. Überwachungseinrichtung (100) nach einem der Ansprüche 12 oder 13, **dadurch gekennzeichnet, dass** der Mutingbetrieb beendet wird, sobald das Transportgut (16) das Gesamtschutzfeld passiert hat.

15. Überwachungseinrichtung (100) nach Anspruch 13, **dadurch gekennzeichnet, dass** abhängig von Detektionen mittels der Distanzsensoren (12) ein Timer gestartet wird, und dass nach Ablauf des Timers der Mutingbetrieb gestartet wird, und/oder dass das Beenden des Mutingbetriebs über einen weiteren Timer gesteuert wird.

16. Überwachungseinrichtung (100) nach einem der Ansprüche 1 bis 15, **dadurch gekennzeichnet, dass** während des Mutingbetriebs mit den Sicherheitssensoren (1) ein Warnfeld im Bereich der Aussparung überwacht wird.

17. Überwachungseinrichtung (100) nach Anspruch 16, **dadurch gekennzeichnet, dass** der Mutingbetrieb beendet wird, sobald das Transportgut (16) das Warnfeld verlassen hat.

18. Überwachungseinrichtung (100) nach einem der Ansprüche 7 bis 17, **dadurch gekennzeichnet, dass** den Distanzsensoren (12) in Transportrichtung des Transportguts (16) Zusatzsensoren vorgeordnet sind, mittels derer das Vorhandensein des Transportguts (16) detektierbar ist, wobei in der Steuer- und Auswerteeinheit die Auswertung für das Einleiten des Mutingbetriebs gestartet wird, wenn mit den Zusatzsensoren das Transportgut (16) detektiert wird.

19. Überwachungseinrichtung (100) nach Anspruch 18, **dadurch gekennzeichnet, dass** die Zusatzsensoren in einem Bereich von 500 Millimetern den Sicherheitssensoren (1) vorgeordnet sind.

## Claims

1. Monitoring device (100) for safeguarding an access to an installation (200) with an arrangement of one or more safety sensors (1), each of which is designed to detect objects (5) within a protective field (17), a safety function being triggered when an object (5) is detected in at least one protective field (17), and with an arrangement of distance sensors (12), by means of which the position and width of a transport item (16) can be detected, which can be fed to the system (200) via the access, and with a control and evaluation unit, by means of which normal operation is predetermined in that protective fields (17) are monitored with the safety sensors (1), which complement each other to form an overall protective field which extends over the entire width of the access, and **characterised in that** a muting operation can be preset with the control and evaluation unit **in that** protective fields (17) are monitored with the safety sensors (1) as a function of the position and width of the transported goods (16) determined with the distance sensors (12), which complement each other to form an overall protective field, in which a recess is present in the area of the access, which is adapted to the position and width of the transported goods (16) in such a way that the latter can pass through the access without penetrating the overall protective field.

2. Monitoring device (100) according to claim 1, **characterised in that** two safety sensors (1) are provided, which are arranged on opposite sides of the access.

3. Monitoring device (100) according to one of claims 1 or 2, **characterised in that** each safety sensor (1) is used to monitor two-dimensional protective fields (17) which are oriented in a vertical plane.

4. Monitoring device (100) according to one of claims 1 or 2, **characterised in that** a three-dimensional area is monitored with each safety sensor (1).

5. Monitoring device (100) according to one of claims 1 to 4, **characterised in that** the safety sensors (1) are scanning distance sensors (12), and/or **in that** the safety sensors (1) are optical sensors or radar sensors.

6. Monitoring device (100) according to one of claims 1 to 5, **characterised in that** two distance sensors (12) in the form of optical sensors or radar sensors are provided, which are provided on opposite sides of the access, wherein in particular the distance sensors (12) are one-dimensional distance sensors (12) which emit radiation in a fixed predetermined direction.

7. Monitoring device (100) according to one of claims 1 to 6, **characterised in that** the transported goods (16) are moved in a transport direction in the direction of the system (200), and **in that** the distance sensors (12) are arranged upstream of the safety sensors (1) in the transport direction.

8. Monitoring device (100) according to claim 7, **characterised in that** the distance sensors (12) are arranged upstream of the safety sensors (1) in a range smaller than 200 millimetres.

9. Monitoring device (100) according to one of claims 6 to 8, **characterised in that** distance values or ranges of distance values generated in the distance sensors (12) are fed to the control and evaluation unit as analogue or digital signals.

10. Monitoring device (100) according to one of claims 1 to 9, **characterised in that** the control and evaluation unit is formed by a safety controller or by at least one evaluation unit of a safety sensor (1).

11. Monitoring device (100) according to one of claims 1 to 10, **characterised in that** the protective fields (17) are preset in muting operation by means of the control and evaluation unit in such a way that the gaps between the edges of the protective fields (17) and the edges of the transported goods (16) are minimised, and/or **in that** the sizes of the protective fields (17) in the muting area are adapted to the contour of the transported goods (16) in steps or continuously to preset the protective fields (17).

12. Monitoring device (100) according to one of claims 1 to 11, **characterised in that** a time control is provided in the control and evaluation unit, by means of which the start and end of the muting operation can be preset.

13. Monitoring device (100) according to claim 12, **characterised in that** the output signals of the distance sensors (12) are used in the control and evaluation unit as trigger signals for the start of muting operation.

14. Monitoring device (100) according to one of claims 12 or 13, **characterised in that** the muting operation is terminated as soon as the transported goods (16) have passed the overall protective field.

15. Monitoring device (100) according to claim 13, **characterised in that** a timer is started as a function of detections by means of the distance sensors (12), and **in that** muting operation is started after the timer has expired, and/or **in that** the termination of muting operation is controlled via a further timer.

16. Monitoring device (100) according to one of claims 1 to 15, **characterised in that** a warning field in the area of the recess is monitored during the muting operation with the safety sensors (1).

17. Monitoring device (100) according to claim 16, **characterised in that** the muting operation is terminated as soon as the transported goods (16) have left the warning field.

18. Monitoring device (100) according to one of claims 7 to 17, **characterised in that** additional sensors are arranged upstream of the distance sensors (12) in the transport direction of the transported goods (16), by means of which sensors the presence of the transported goods (16) can be detected, wherein the evaluation for initiating the muting operation is started in the control and evaluation unit when the transported goods (16) are detected by the additional sensors.

19. Monitoring device (100) according to claim 18, **characterised in that** the additional sensors are arranged upstream of the safety sensors (1) in a range of 500 millimetres.

## Revendications

1. Dispositif de surveillance (100) pour sécuriser un accès à une installation (200), comprenant un ensemble d'un ou plusieurs capteurs de sécurité (1), chacun d'entre eux étant conçu pour détecter des objets (5) dans un secteur de protection (17), une fonction de sécurité étant déclenchée lorsqu'un objet (5) est détecté dans au moins un secteur de protection (17), et avec un ensemble de capteurs de distance (12) permettant de détecter la position et la largeur d'un objet de transport (16), qui peut être transmis au système (200) via l'accès, et avec une unité de commande et d'évaluation permettant de prédéterminer le fonctionnement normal en surveillant les secteurs de protection (17) à l'aide des capteurs de sécurité (1), qui se complètent pour former un secteur de protection global s'étendant sur toute la largeur de l'accès, et **caractérisé par le fait que** l'unité de commande et d'évaluation permet de prérégler un mode d'inhibition dans lequel les secteurs de protection (17) sont surveillés par les capteurs de sécurité (1) en fonction de la position et de la largeur des marchandises transportées (16) déterminées à l'aide des capteurs de distance (12), qui se complètent pour former un secteur de protection global, dans lequel un renfoncement est présent dans la zone d'accès, adapté à la position et à la largeur des marchandises transportées (16) de manière à ce que ces dernières puissent franchir le passage d'accès sans pénétrer dans le secteur de protection global.

2. Dispositif de surveillance (100) selon la revendication 1, **caractérisé par** la présence de deux capteurs de sécurité (1) disposés sur les côtés opposés du passage d'accès.

3. Dispositif de surveillance (100) selon l'une des revendications 1 ou 2, **caractérisé par le fait que** chaque capteur de sécurité (1) est utilisé pour surveiller des secteurs de protection bidimensionnels (17) orientés dans un plan vertical.

4. Dispositif de surveillance (100) selon l'une des revendications 1 ou 2, **caractérisé par le fait qu'**une zone tridimensionnelle est surveillée par chaque capteur de sécurité (1).

5. Dispositif de surveillance (100) selon l'une des revendications 1 à 4, **caractérisé par le fait que** les capteurs de sécurité (1) sont des capteurs de distance à balayage (12), et/ou par **le fait que** les capteurs de sécurité (1) sont des capteurs optiques ou des capteurs radar.

6. Dispositif de surveillance (100) selon l'une des revendications 1 à 5, **caractérisé par** la présence de deux capteurs de distance (12) sous forme de capteurs optiques ou de capteurs radar, placés sur les côtés opposés du passage d'accès, les capteurs de distance (12) étant notamment des capteurs de distance unidimensionnels (12) qui émettent un rayonnement dans une direction fixe prédéterminée.

7. Dispositif de surveillance (100) selon l'une des revendications 1 à 6, **caractérisé par le fait que** les marchandises transportées (16) sont déplacées dans une direction de transport dans la direction du système (200), et **par le fait que** les capteurs de distance (12) sont disposés en amont des capteurs de sécurité (1) dans la direction de transport.

8. Dispositif de surveillance (100) selon la revendication 7, **caractérisé par le fait que** les capteurs de distance (12) sont disposés en amont des capteurs de sécurité (1) dans une plage inférieure à 200 millimètres.

9. Dispositif de surveillance (100) selon l'une des revendications 6 à 8, **caractérisé par le fait que** les valeurs de distance ou les plages de valeurs de distance générées par les capteurs de distance (12) sont transmises à l'unité de commande et d'évaluation sous forme de signaux analogiques ou numériques.

10. Dispositif de surveillance (100) selon l'une des revendications 1 à 9, **caractérisé par le fait que** l'unité de commande et d'évaluation est formée par un dispositif de commande de sécurité ou par au moins une unité d'évaluation d'un capteur de sécurité (1).

11. Dispositif de surveillance (100) selon l'une des revendications 1 à 10, **caractérisé par le fait que** les secteurs de protection (17) sont prédéfinis en mode d'inhibition par l'unité de commande et d'évaluation de manière à minimiser les écarts entre les bords des secteurs de protection (17) et les bords de la marchandise transportée (16), et/ou **par le fait que** les dimensions des secteurs de protection (17) dans la zone d'inhibition sont adaptées au contour de la marchandise transportée (16) par étapes ou en continu afin de prédéfinir les secteurs de protection (17).

12. Dispositif de surveillance (100) selon l'une des revendications 1 à 11, **caractérisé en ce qu'**une commande temporelle est prévue dans l'unité de commande et d'évaluation, au moyen de laquelle le début et la fin du mode d'inhibition peuvent être prédéfinis.

13. Dispositif de surveillance (100) selon la revendication 12, **caractérisé par le fait que** les signaux de sortie des capteurs de distance (12) sont utilisés dans l'unité de commande et d'évaluation comme signaux de déclenchement pour le début du mode d'inhibition.

14. Dispositif de surveillance (100) selon l'une des revendications 12 ou 13, **caractérisé par le fait que** le mode d'inhibition est interrompu dès que les marchandises transportées (16) ont franchi le secteur de protection global.

15. Dispositif de surveillance (100) selon la revendication 13, **caractérisé par le fait qu'**une minuterie est déclenchée en fonction des détections effectuées au moyen des capteurs de distance (12), et **par le fait que** le mode d'inhibition est lancé à l'expiration de la minuterie, et/ou **par le fait que** la fin du mode d'inhibition est commandée par une autre minuterie.

16. Dispositif de surveillance (100) selon l'une des revendications 1 à 15, **caractérisé par le fait qu'**un secteur d'alerte dans la zone de l'évidement est surveillé pendant le mode d'inhibition à l'aide des capteurs de sécurité (1).

17. Dispositif de surveillance (100) selon la revendication 16, **caractérisé par le fait que** le mode d'inhibition est terminé dès que les marchandises transportées (16) ont quitté le secteur d'alerte.

18. Dispositif de surveillance (100) selon l'une des revendications 7 à 17, **caractérisé par le fait que** des capteurs supplémentaires sont disposés en amont des capteurs de distance (12) dans la direction de transport des marchandises transportées (16), au moyen desquels les capteurs peuvent détecter la présence des marchandises transportées (16), l'évaluation pour le déclenchement du mode d'inhibition étant lancée dans l'unité de commande et d'évaluation lorsque les marchandises transportées (16) sont détectées par les capteurs supplémentaires.

19. Dispositif de surveillance (100) selon la revendication 18, **caractérisé par le fait que** les capteurs supplémentaires sont disposés en amont des capteurs de sécurité (1) dans une plage de 500 millimètres.
